# EUROPÄISCHE PATENTANMELDUNG

(11) **EP 4 759 505 A1**
(43) Veröffentlichungstag der Anmeldung: **17.06.2026**
(21) Anmeldenummer: 25226476.7
(22) Anmeldetag: 24.02.2021
(51) Int. Cl.: B29C 44/44, B29C 35/08, B29C 67/20, A23L 7/161, C08L 3/02

(54) **EINSATZ VON ELEKTROMAGNETISCHER STRAHLUNG BEI DER HERSTELLUNG VON POPCORNHALTIGEN FORMTEILEN**

(30) Priorität: 27.02.2020 DE 102020105205
(62) Teilanmeldung aus: 21708198.3
(71) Anmelder: Georg-August-Universität Göttingen Stiftung Öffentlichen Rechts, 37073 Göttingen (DE)
(72) Erfinder: EURING, Markus, 37124 Rosdorf (DE); KHARAZIPOUR, Alireza, 37079 Göttingen (DE)
(74) Vertreter: Michalski Hüttermann & Partner mbB

(57) **Zusammenfassung**

Die vorliegende Erfindung bezieht sich auf zwei- und dreidimensionale Formteile und Verbundwerkstoffe, die aus Popcorn, synthetischen und/oder natürlichen Bindemitteln bestehen, welche in Formteilautomaten oder ähnlichen Pressanlagen mittels Radiowellentechnologie oder Mikrowellen ausgehärtet werden. Mittels dieser Technologien können leichte, zwei- und dreidimensionale Formteile und Verbundwerkstoffe für Verpackungen, als Interieur- und Exterieurteile (z. B. im Auto- und Wohnmobilbau), Schallabsorber, Raum-Trennelemente, Möbel, Konsumgüter, für das Baugewerbe oder zur Wärmedämmung produziert werden.

## Beschreibung

Die vorliegende Erfindung bezieht sich auf das Gebiet der Formteile, wie sie z. B. für Verpackungen, in der Automobilindustrie (Interieur und Exterieur), als Schallabsorber, für die Wärmedämmung oder in der Konsumgüterindustrie verwendet werden. Derartige Formteile sollten leicht herstellbar und ebenso leichtgewichtig sein, und vorzugsweise ganz oder teilweise aus nachwachsenden Rohstoffen bestehen.

Derartige Formteile werden bisher hauptsächlich aus Polypropylen, Polyethylen, Polyvinylchlorid und Polystyrol hergestellt. Diese Formteile aus vier Kunststofffamilien haben neben positiven Eigenschaften, wie eine niedrige Dichte, hydrophobe Oberfläche, eine gute Verarbeitbarkeit und niedrige Wärmeleitfähigkeit auch zahlreiche negative Charakteristiken.

Negativ ist, dass das Material oftmals sehr spröde ist und nur eine sehr geringe chemische Beständigkeit und Erweichungstemperatur besitzt. Des Weiteren zeigten die Produkte aus diese Kunststoffen oftmals eine sehr niedrige Schmelztemperatur, die dazu führt, dass der Kunststoff bereits bei Temperaturen wenig über 100 °C schmilzt und brennend abtropft. Diese Tropfen können Feuer fangen und zur Brandausbreitung beitragen. Durch den Einsatz von passenden, jedoch oft sehr giftigen Flammschutzmitteln kann die Brennbarkeit reduziert werden. Bislang werden oftmals bromierte und äußerst umwelt- und gesundheitsschädliche Additive (polybromierte Diphenylether oder Hexabromcyclododecan) verwendet.

Im Weiteren werden diese Kunststoffe zumeist aus endlichen fossilen Rohstoffen hergestellt, die teilweise schwer wiederverwendbar sind. Die Zunahme von Plastikmüll auf dem Land und insbesondere in den Weltmeeren wird zu einem immer größeren ökologischen Problem mit globaler Bedeutung. Bei der Verbrennung wird Kohlenstoffdioxid freigesetzt, Kunststoffpartikel gelangen in die Nahrungskette und durch die Zersetzung werden Schadstoffe frei. Organisationen wie EU und UN weisen darauf hin, dass bei einem weiteren Wirtschaftswachstum und gleichbleibenden Konsumverhalten die Umweltprobleme im Zusammenhang mit Kunststoff weiter zunehmen werden. Aufgrund dieser gesundheitlichen und ökologischen Probleme, die im Allgemeinen bekannt sind, ist in jüngster Zeit der Ruf nach Alternativen immer lauter geworden.

Es stellt sich somit die Aufgabe, Verfahren für die Herstellung alternativer Formteile zur Verfügung zu stellen.

Diese Aufgabe wird durch ein Verfahren gemäß Anspruch 1 gelöst. Demgemäß wird ein Verfahren zur Herstellung von popcornhaltigen Formteilen vorgeschlagen, wobei während der Herstellung der Formteile diese zeitweise gezielt elektromagnetischer Strahlung in einem Frequenzbereich von ≥30 kHz bis ≤300GHz ausgesetzt werden

Überraschenderweise hat sich herausgestellt, dass so bei vielen Anwendungen der Erfindung eine Vielzahl von Formteilen mit guten bis exzellenten Eigenschaften (u. a. geringe Wärmeleitfähigkeit, ausgezeichnete Dimensionstabilität, hervorragende Sachallabsorptionseigenschaften und Schwerentflammbarkeit) herstellbar ist, die somit zum überwiegenden Teil aus nachwachsenden Rohstoffen, nämlich dem Popcorn besteht. Weiter konnte überraschend gezeigt werden, dass das vorgeschlagene Verfahren sich zur Herstellung popcornhaltiger Formteile eignet, obwohl Popcorn (im Vergleich zu beispielsweise Puffmais) nur einen geringen Wasseranteil aufweist und somit nur eine geringe Effizienz der elektromagnetischen Strahlung zu erwarten war. Der gezielte Einsatz von elektromagnetischer Strahlung in einem Frequenzbereich von ≥30 kHz bis ≤300GHz hat dabei für die meisten Anwendungen mindestens einen oder mehrere der folgenden Vorteile:
- Die Strahlung liegt im Mikrowellen- oder Radiowellenbereich; entsprechende Generatoren sind weithin verfügbar, so dass das Verfahren auf einfache Weise durchführbar ist.
- Werden die Formteile mittels Formteilautomaten mit geeigneten Kavitäten (s. nachfolgend) hergestellt, sind, wenn die Kavitäten zusätzlich mit Heizelementen ausgestattet, noch höhere Temperaturen und kürzere Verweilzeiten in dem Formteilautomaten möglich.
- Energieeinsparung durch Einsatz von Radiowellen gegenüber konventioneller Herstellung (Pressvorgang, und Dampfinjektionsverfahren).
- Es sind 2, 2,5 und 3-dimensionale Formteile herstellbar (z. B. Verpackung).
- Es sind Produkte mit sehr geringer Dichte herstellbar (mit Styropor konkurrenzfähig)
- Die Herstellung ist oftmals günstiger als bei vergleichbaren Kunststoffprodukten.
- Die Formteile sind meist vollständig recyclysierbar.
- Wie im Folgenden noch beschrieben, kann die Menge an notwendigem Bindemittel durch das erfindungsgemäße Verfahren nochmals verringert oder das Bindemittel sogar ganz weggelassen werden.
- Durch das erfindungsgemäße Verfahren ist eine Vielzahl von zwei- und dreidimensionalen Formteilen aus Popcorn mit guten bis exzellenten Eigenschaften (u. a. sehr geringe Rohdichten zwischen 40 bis 230 kg/m³, geringe Wärmeleitfähigkeit, ausgezeichnete Dimensionsstabilität, hervorragende Sachallabsorptionseigenschaften und Schwerentflammbarkeit) bei sehr geringen Presszeiten ( 1 - 5 s/mm Plattendicke, insbesondere 2 - 3 s/mm Plattendicke) und gleichmäßiger Durchwärmung herstellbar

Durch das erfindungsgemäße Verfahren kann insbesondere bei vielen Anwendungen in vorteilhafter Weise erreicht werden, dass im Vergleich zu Formteilen, die direkt aus Puffmais oder anderen unbehandelten Pflanzenteilen hergestellt werden, also Formteile bei denen beispielsweise Puffmais innerhalb einer Form durch Wärmeeintrag expandiert wurde, Formteile mit einer besonders homogene Struktur erhalten werden können und auch Formteile mit einer besonders geringeren Dichte erreichbar sind.

Ferner kann durch das erfindungsgemäße Verfahren bei vielen Anwendungen in vorteilhafter Weise erreicht werden, das im Vergleich zu anderen Formteilen, die beispielsweise aus Puffmais mittels thermischer Behandlung erhalten werden, Formteile mit einer vergleichsweise besseren Stabilität, beispielsweise Querzugfestigkeit oder/und Abhebefestigkeit erreicht werden können. Somit können mit dem erfindungsgemäßen Verfahren auch Formteile mit besonders geringer Dichte realisiert werden, die im Vergleich zu anderen Formteilen noch eine ausreichende Stabilität aufweisen um interessant für verschiedene Anwendungen zu sein.

Der Term "Popcorn" im Sinne der vorliegenden Erfindung umfasst insbesondere alle Materialien, welche wie der Puffmais (*Zea mays, convar. Microsperma*) - gegebenenfalls nach entsprechender Einfettung bei einer schnellen Erwärmung zu hohen Temperaturen explodieren, indem das in dem Samen vorhandene Wasser schlagartig verdampft und so die im Samen enthaltene Stärke in eine schaumartige Konsistenz überführt. Ein solches Verhalten ist unter anderem von Quinoa-Korn, Amarant, Reis oder auch Weizen bekannt, Materialien, die auf diesen Grundstoffen basieren, werden im Sinne der vorliegenden Erfindung explizit auch als "Popcorn" bezeichnet und umfasst, die Bezeichnung "Popcorn" soll nicht nur auf Mais beschränkt sein und wurde insbesondere aus Gründen der Einfachheit, Übersichtlichkeit und Lesbarkeit gewählt.

Der Term "gezielt" beinhaltet insbesondere den Einsatz einer entsprechenden Strahlungsquelle.

Es sei angemerkt, dass im Folgenden bei der Verfahrensbeschreibung, wenn von "Formteilen" die Rede ist, auch die Vorläufer des Formteils bei der Herstellung mit umfasst sein sollen. Der Term "Formteil" soll sich explizit nicht nur auf das fertige Formteil beschränken sondern auch auf Materialien oder Gegenstände, aus denen die Formteile im Herstellungsverfahren hergestellt werden; die Verwendung des Terms "Formteil" auch für Vorläufermaterialen und -gegenstände geschieht nicht zum Zwecke der Einschränkung sondern unter anderem zur besseren Lesbarkeit.

Unter dem Begriff "Herstellung der Formteile" wird im Sinne der vorliegenden Erfindung insbesondere ein Verfahrensschritt verstanden, in dem die tatsächliche Form des Formteils ausgebildet wird. In anderen Worten wird in dem vorgeschlagenen Verfahren während einer Ausbildung der Form des Formteils, dieses zeitweise gezielt elektromagnetischer Strahlung in einem Frequenzbereich von ≥30 kHz bis ≤300GHz ausgesetzt.

Gemäß einer bevorzugten Ausführungsform wird das Verfahren so ausgeführt, dass beim Einsatz der elektromagnetischen Strahlung ein zumindest teilweises Verkleben und/oder Aufschmelzen an der Oberfläche des Formteils stattfindet.

Gemäß einer bevorzugten Ausführungsform wird das Verfahren so ausgeführt, dass beim Einsatz der elektromagnetischen Strahlung zumindest an einem Bereich an der Oberfläche des Formteils eine Temperatur von ≥ 70°C erreicht wird. Dies kann gemäß einer bevorzugten Ausführungsform der Erfindung ausschließlich durch den Einsatz der elektromagnetischen Strahlung geschehen, gemäß einer alternativen Ausführungsform der Erfindung sind zusätzliche Heizmittel vorgesehen. Diese können z.B. Heizelemente oder auch der Einsatz von Heißdampf sein.

Bevorzugt wird das Verfahren so ausgeführt, dass beim Einsatz der elektromagnetischen Strahlung zumindest an einem Bereich an der Oberfläche des Formteils eine Temperatur von ≥ 100°C, noch bevorzugt ≥ 150°C erreicht wird.

Gemäß einer bevorzugten Ausführungsform besitzt die elektromagnetische Strahlung eine Leistung von ≥ 20 W bis ≤ 5000W, noch bevorzugt ≥ 50 W bis ≤ 4000W, noch bevorzugt ≥ 80 W bis ≤ 3000W sowie am meisten bevorzugt ≥ 100 W bis ≤ 2500W.

Gemäß einer bevorzugten Ausführungsform wird das Formteil elektromagnetischer Strahlung so ausgesetzt, dass die Leistungsdichte (gemessen bezüglich der Oberfläche des Formteils) von ≥ 1 W/cm² bis ≤ 250 W/cm², noch bevorzugt ≥ 2 W/cm² bis ≤ 200 W/cm², noch bevorzugt ≥ 5 W/cm² bis ≤ 150 W/cm² sowie am meisten bevorzugt ≥ 10 W/cm² bis ≤ 100 W/cm² beträgt.

Gemäß einer bevorzugten Ausführungsform der Erfindung beträgt die Amplitude der elektromagnetischen Strahlung von ≥ 1 kV bis ≤ 10 kV.

Gemäß einer bevorzugten Ausführungsform der Erfindung werden während der Herstellung Radiowellen benutzt. Darunter werden insbesondere Wellen im Frequenzbereich von ≥30 kHz bis ≤300 MHz verstanden.

Gemäß einer bevorzugten Ausführungsform der Erfindung werden während der Herstellung Mikrowellen benutzt. Darunter werden insbesondere Wellen im Frequenzbereich von ≥300 MHz bis ≤300 GHz verstanden.

Gemäß einer bevorzugten Ausführungsform umfasst das Verfahren einen Pressschritt und es werden während der Verpressung der Formteile diese zeitweise gezielt elektromagnetischer Strahlung in einem Frequenzbereich von ≥30 kHz bis ≤300GHz ausgesetzt. Insbesondere ist ein Frequenzbereich zwischen 25 MHz und 30 MHz vorteilhaft.

Gemäß einer bevorzugten Ausführungsform der Erfindung umfasst das erfindungsgemäße Verfahren die folgenden Schritte:
a) Herstellen von Popcorn,
b) optionale Hydrophobierung des in Schritt a) hergestellten Popcorns mittels eines Polymers,
c) optionale Nachbehandlung,
d) optionale Zugabe von Bindemittel,
e) Herstellung des Formteils,
f) optionale Beschichtung der Formteiloberfläche; und
g) optionale Kaschierung.

Gemäß einer bevorzugten Ausführungsform der Erfindung ist somit vorgesehen, dass zumindest in Verfahrensschritt e) die Formteile gezielt elektromagnetischer Strahlung in einem Frequenzbereich von ≥30 kHz bis ≤300 GHz ausgesetzt werden

Die einzelnen Schritte des Verfahrens werden im Folgenden näher erläutert, wobei beliebige Teilschritte mit anderen beliebig kombinierbar sind.

### a) Herstellen von Popcorn

Maiskörner können mit unterschiedlichen Methoden zum Expandieren gebracht werden.

Gemäß einer bevorzugten Ausführungsform der Erfindung wird das für die Herstellung der Formteile benutzte Popcorn wird durch Puffung hergestellt. Dabei können je nach Anwendung unveränderte Körner verwendet werden oder es werden geeignete Samen, z. B. Futtermaiskörner zunächst geschrotet und die Kornbruchstücke anschließend unter Druck- und Temperatureinwirkung nach dem Bichselverfahren (WO 1999042005A1) einem definierten Prozess expandiert. Weitere Verfahren zur Puffung der stärkehaltigen Körner sind bspw. Heizplatten, Heißluftmaschinen und Mikrowellen.

Eine bevorzugte Ausführungsform der Erfindung verwendet das sogenannte Cerex-Verfahren der Cerex AG, CH-3368 Bleienbach. Das Verfahren lässt sich in drei Abschnitte unterteilen: Vorheizelement, Reaktor sowie Expansionskammer. Zuerst wird das Getreideschrot im Vorheizelement gleichmäßig auf ca. 100 °C erwärmt, anschließend wird das Getreide im Reaktor mit Heißdampf behandelt und am Ende des Prozesses wird das Getreide in eine Expansionskammer geleitet. Hier werden die Maiskörner (Maisschrot) in einer bestimmten Zeitspanne durch Druckreduzierung zum Expandieren gebracht. Am Ende werden die aufgepufften Materialien gesammelt und von den nicht gepufften Bestandteilen getrennt (Bichsel, o. J.). Die Umwandlung von Maisschrot zu Popcorngranulat nach dem Cerex-Verfahren erfolgt bei den meisten Anwendungen fast zu 100 %, lediglich weniger als 5 % des Schrots werden nicht aufgepufft.

Weiterhin kann vor Schritt b) das Popcorn nochmals zerkleinert werden, so dass gemäß einer bevorzugten Ausführungsform der Erfindung das Verfahren einen Schritt a1) umfasst, der zwischen Schritt a) und b) durchgeführt wird:
a1) Zerkleinern des gepufften Popcorns

Schritt a1) kann dabei mit allen gängigen Herstellungstechniken vorgenommen werden.

### b) Optionale Hydrophobierung mittels Polymer

In Schritt b) wird das Popcorn hydrophobiert, so dass es am Ende im Wesentlichen von Polymer umgeben ist. Dies kann bevorzugt dadurch geschehen, dass das Popcorn gemischt und dabei mit dem Polymer und/oder Vorläufersubstanzen bzw. einer das Polymer und/oder Vorläufersubstanzen enthaltenen Lösung besprüht wird.

Nach der Hydrophobierung bzw. dem Coatingprozess entsteht bevorzugt ein förderfähiges (z. B. pneumatisch), schüttfähiges hydrophobes Popcorngranulat. Gemäß einer bevorzugten Ausführungsform der Erfindung wird das Polymer so gewählt, dass nach Hydrophobierung die Möglichkeit besteht, die überzogenen Popcorngranulate zu vernetzen

### c) Optionale Nachbehandlung

Gemäß einer bevorzugten Ausführungsform der Erfindung folgt auf Schritt b) eine Nachbehandlung des entstandenen hydrophobierten Popcoms. Bevorzugt wird auf eine Temperatur von ≥ 60 °C bis ≤150°C erhitzt.

Dies hat sich bei vielen Anwendungen als vorteilhaft herausgestellt, da so die hydrophoben Eigenschaften des entstandenen Popcorngranulats nochmals verbessert werden können.

### d) Optionale Zugabe von Bindemittel

Je nach Anwendung kann noch ein weiteres Bindemittel zugegeben werden. Als Bindemittel sind insbesondere Thermoplasten, Duroplasten, Aminoplasten, Phenoplasten, Isocyanate, Proteine, Tannine, Stärke, synthetische Bindemittel oder naturnahe Bindemittel, oder Mischungen von Bindemitteln eingesetzt werden, wie z. B. Harnstoff-Formaldehyd-Harz, Melamin-Formaldehyd-Harz, Melaminverstärktes-Harnstoff-Formaldehyd-Harz, Tannin-Formaldehyd-Harz, Phenol-Formaldehyd-Harz, polymeres Diphenyl-Methan-Di-Isocyanat oder Mischungen daraus bevorzugt.

Bevorzugt beträgt dabei der Anteil von Bindemittel im Formteil (in Gew-% bezogen auf das Gewicht des Formteils) ≤ 10 %, bevorzugt ≤ 5 %.

Der Bindemittelauftrag kann nach beliebigen konventionellen Mischer- oder Strömungsverfahren aufgetragen werden, z. B. durch Besprühen des Granulats in diversen Mischaggregaten.

### e) Herstellung des Formteils

Während der Herstellung des Formteils wird dieses gemäß der Erfindung zeitweise gezielt elektromagnetischer Strahlung in einem Frequenzbereich von ≥30 kHz bis ≤300GHz ausgesetzt.

Bevorzugt kann vorgesehen sein, dass das Popcorngranulat in eine Form gegebenen wird und in dieser zeitweise gezielt elektromagnetischer Strahlung in einem Frequenzbereich von ≥30 kHz bis ≤300GHz ausgesetzt wird.

Das Formteil wird bevorzugt aus dem Popcorngranulat unter leicht erhöhtem Druck und/oder Temperatur hergestellt. Während dieses Schrittes wird gezielt elektromagnetischer Strahlung in einem Frequenzbereich von ≥30 kHz bis ≤300GHz verwendet.

Bevorzugte Drücke (Überdruck) sind dabei ≥ 0,1 bar und ≤ 10 bar, bevorzugt ≤ 6 bar, sowie am meisten bevorzugt ≤ 5-7 bar.

Alternativ kann das Formteil aber auch unter Unterdruck hergestellt werden. Bevorzugte Unterdrücke sind dabei ≥ 0,1 bar und ≤ 3 bar.

Bevorzugte Presszeiten sind dabei ≥ 0,5 s/mm Formteil und ≤ 24 s/mm Formteil, bevorzugt ≤ 8 s/mm Formteil.

Zur Herstellung des Formteils als solchem werden bevorzugt zwei Techniken benutzt:

### 1) Formpressen

Dieses Verfahren ist besonders bevorzugt für leicht gewölbte oder flache Bauteile. Haupteinsatzgebiet dieses Verfahrens ist üblicherweise die Automobilindustrie, Verpackungsindustrie wo es zur Produktion größerer Bauteile mit zweidimensionaler oder dreidimensionaler Struktur kommt.

Zu Beginn des Verfahrens wird die Formmasse, d. h. das von Polymer umgebene Popcorn mit ggf. weiterem Bindemittel in eine Kavität eingebracht und unter Einsatz eines Druckkolbens geschlossen. Durch den Druck erlangt die Formmasse die vom Werkzeug vorgegebene Form. Die in der Kavität vorhandenen Formmasse wird unter Druck und Bestrahlung mit elektromagnetischer Strahlung in einem Frequenzbereich von ≥30 kHz bis ≤300GHz aufgeheizt.

Bei Verwendung von duroplastischen Kunststoffen als Polymeren dient die Temperatur dabei unter anderem zur Beeinflussung des Aushärtevorgangs, bei Thermoplasten zum Schmelzen des Kunststoffs. Danach kann das fertige Teil aus dem Formwerkzeug entnommen und ggf. nach- oder weiterverarbeitet bzw. beschichtet oder kaschiert (z. B. Folien auf Stärkebasis oder PU-Folien) werden.

### 2) Verwendung von Formteilautomaten

Bei dieser Technik werden meist Spezial-Formteilautomaten benutzt, welche höhere Drücke und/oder Temperaturen ermöglichen. Dabei besteht der erste Prozessschritt im pneumatische Komprimieren der Formmasse (d.h. das optional von Polymer umgebene Popcorn mit ggf. weiterem Bindemittel) und das Befüllen des geschlossenen Spezial-Formteilautomaten mit der komprimierten Formmasse. Alternativ kann auch die Formmasse durch ein Vakuum in die Kavität gefördert werden.

Mit Hilfe der gezielten elektromagnetischen Strahlung in einem Frequenzbereich von ≥30 kHz bis ≤300GHz und ggf. Druck wird die Formmasse auf die gewünschte Aushärtetemperatur gebracht und dadurch, je nach Anwendung, das Polymer vollständig miteinander vernetzt.

Nachdem die Popcornpartikel miteinander vernetzt bzw. verschmolzen werden, wird in dem letzten Prozessschritt das Formteil aus dem Werkzeugteil entnommen. Danach können die Formteile beschichtet oder kaschiert (z. B. Folien auf Stärkebasis, PU-Folien oder PLA-Folien, Beflockung) werden.

### f) Optionale Beschichtung der Formteiloberfläche

Je nach Anwendung kann die Formteiloberfläche noch beschichtet werden, z. B. in dem Farben, beispielsweise mittels Lackierung aufgebracht werden. Die Formteiloberfläche kann aber auch beflockt werden, je nach Anwendung kann es auch vorteilhaft sein, wenn eine weitere Imprägnierungsschicht aufgebracht wird.

### g) Optionale Kaschierung

Je nach Anwendung kann aber auch alternativ oder zusätzlich eine Kaschierung erfolgen. Dabei können die gängigen Kaschierungsmittel wie Lack, Leim oder Wachs zum Einsatz kommen.

Die vorliegende Erfindung bezieht sich ausserdem auf ein Formteil, hergestellt nach dem erfindugsgemäßen Verfahren.

Dabei umfasst gemäß einer bevorzugten Ausgestaltung der Erfindung umfasst das Formteil sowohl Polymer wie Bindemittel.

Gemäß einer bevorzugten Ausführungsform umfasst das Formteil im Wesentlichen Popcorn, Polymer und Bindemittel, bzw. besteht im Wesentlichen daraus.

"Im Wesentlichen" im Sinne der vorliegenden Erfindung bedeutet einen Anteil von ≥ 95 % (Gewicht), bevorzugt ≥ 97 %, noch bevorzugt ≥ 99 %. Gemäß der vorliegenden Erfindung ist somit das allermeiste Popcorn von Polymer umgeben.

Bevorzugt beträgt der summierte Anteil an Polymer und Bindemittel ≤ 15% (Gew./Gew.) bezogen auf das Formteil, noch bevorzugt ≤ 10% (Gew./Gew.). Ein geringerer Anteil an Polymer und Bindemittel (wo vorhanden) ist vorteilhaft, da so das Formteil leichter und der Anteil an nachwachsenden Rohstoffen (= Popcorn) erhöht wird.

Gemäß einer bevorzugten Ausführungsform besteht das Formteil im Wesentlichen aus Popcorn. Es hat sich bei vielen Ausgestaltungen der vorliegenden Erfindung herausgestellt, dass durch das erfindungsgemäße Verfahren auf Bindemittel weitgehend verzichtet werden kann, was ein Vorteil der vorliegenden Erfindung ist.

Gemäß einer bevorzugten Ausführungsform wird im Formteil das Popcorn als Ganzes benutzt, d. h. es werden ganze Körner und/oder Samen expandiert und das Popcorn danach nicht gehäckselt (geschrotet) oder zerkleinert verwendet.

Gemäß einer alternativen und ebenso bevorzugten Ausführungsform wird Popcorn benutzt, welches aus zuvor zerkleinerten Ausgangsmaterialien (z. B. Maisschrot) hergestellt wurde. Gegebenenfalls kann das expandierte Granulat vor der Verarbeitung zu Formteilen noch zerkleinert werden.

Natürlich sind auch Ausführungsformen vorteilhaft, in denen im Formteil sowohl vollständiges wie gemäß dem vorigen Absatz behandeltes Popcorn verwendet wird.

Gemäß einer bevorzugten Ausführungsform der Erfindung beträgt der Fettanteil des Popcorns vor der Verarbeitung ≤ 10 (Gew-) %.

Unter "Fettanteil" des Popcorns wird dabei nicht der Gesamtanteil an Fett im Popcorn verstanden, sondern der Anteil an Fett, welcher zur Hydrophobierung der Samenepidermis eingesetzt wurde, die zum besseren Einschluss des im Samen enthaltenen Wassers führt.

Es hat sich bei vielen Anwendungen innerhalb der vorliegenden Erfindung als günstig herausgestellt, diesen Fettanteil so gering wie möglich zu halten, da dies die weitere Verarbeitung des Popcorns erleichtert. Vorzugsweise beträgt der Fettanteil ≤ 5 (Gew-) %, nach einer besonders bevorzugten Ausführungsform wird zur Konsistenzänderung (Umwandlung) (="Puffung") kein Fett zugesetzt.

Gemäß einer bevorzugten Ausführungsform der Erfindung wird das für die Herstellung der dreidimensionalen Formteile benutzte Popcorn nach der Aufpuffung mit einem Polymer überzogen (Coating). Mit "überzogen" ist dabei gemeint, dass die einzelnen Popcornteilchen von dem Polymer, dass aus synthetischen und/oder biologischen Bestandteilen zusammengesetzt ist, umgeben und/oder umhüllt sind. Bevorzugt findet dabei jedoch keine oder nur wenig allgemeine Verklebung statt, so dass z. B. das Popcorn nach der Umhüllung und vor der weiteren Verarbeitung als solches als Granulat vorliegt, d. h. schüttfähig ist.

Das Polymer, welches das Popcorn umgibt, ist vorzugsweise ein hydrophobes Polymer. Bevorzugte Polymere sind ausgewählt aus der Gruppe umfassend Thermoplasten wie Polypropylen, Polyethylen, Polyvinylchlorid, Polystyrol, Polyacrylat und Duroplasten, insbesondere kondensierte Aminoplast-Harzen. Weiterhin sind biologisch basierte Polymere, wie z. B. Polymilchsäuren (PLA), Polyhydroxysäuren wie z. B. Polyhydroxybuttersäure oder Cellulosederivate geeignet, um die Oberfläche der einzelnen Popcorngranulate zu überziehen. Das Polymer kann auch aus einer beliebigen Mischung daraus bestehen.

Bevorzugt beträgt dabei der Anteil von Polymer im Formteil (in Gew-% bezogen auf das Gewicht des Formteils) ≤ 5%, bevorzugt ≤ 3%.

Gemäß einer bevorzugten Ausführungsform der Erfindung umfasst das Formteil ein Bindemittel. Als Bindemittel sind insbesondere Thermoplasten, Duroplasten, Aminoplasten, Phenoplasten, Isocyanate, Proteine, Tannine, Stärke, synthetische Bindemittel oder naturnahe Bindemittel, oder Mischungen von Bindemitteln eingesetzt werden, wie z. B. Harnstoff-Formaldehyd-Harz, Melamin-Formaldehyd-Harz, Melaminverstärktes-Harnstoff-Formaldehyd-Harz, Tannin-Formaldehyd-Harz, Phenol-Formaldehyd-Harz, polymeres Diphenyl-Methan-Di-Isocyanat, Polyurethan oder Mischungen daraus bevorzugt.

Bevorzugt beträgt dabei der Anteil von Bindemittel im Formteil (in Gew-% bezogen auf das Gewicht des Formteils) ≤ 10 %, bevorzugt ≤ 5 %.

Bevorzugt beträgt das Verhältnis von Bindemittel zu Polymer (in Gew/Gew/ von ≥1:1 bis ≤10:1. Dies hat sich für viele Anwendungen innerhalb der vorliegenden Erfindung als vorteilhaft herausgestellt. Bevorzugt beträgt das Verhältnis von Bindemittel zu Polymer (in Gew/Gew/ von ≥1,5:1 bis ≤5:1

Die erfindungsgemäßen Formteile und/oder die gemäß dem erfindungsgemäßen Verfahren hergestellten Formteile können bei einer Vielzahl von Anwendungen eingesetzt werden, darunter (aber nicht darauf beschränkt):
Verpackungsmaterialien (z. B. Kühlboxen, Schutzverpackung für Elektrogeräte, Gewürzdosen etc.), Automobilteile (z. B. Kopfstützen, Sonnenblenden, Kindersitzschalen, Dämmmatten für Türinnenverkleidungen und Wohnmobil-Kabinenverkleidungen), Dämmmaterialien (z. B. Elektrogeräte), Geschirr, Sportartikel (z. B. Yoga-Rollen, Nackenrollen), Spielzeug (z. B. Würfel, Bretter für Gesellschaftsspiele, Puzzle), Bilderrahmen, Präsentkörbe, Akustische Verbund-Formteile, Wohnmobilteile etc.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in denen - beispielhaft - mehrere Ausführungsbeispiele des erfindungsgemäßen Verfahrens dargestellt sind. In den Zeichnungen zeigt:
- Fig. 1 bis Fig. 3: schematisch den Ablauf eines Herstellungsverfahrens eines erfindungsgemäßen Formteils gemäß einer ersten Ausführungsform;
- Fig. 4: schematisch den Ablauf eines Herstellungsverfahrens eines erfindungsgemäßen Formteils gemäß einer zweiten Ausführungsform; sowie
- Fig. 5: ein Diagramm, welches die Schallabsorptionseigenschaften erfindungsgemäßer Formteile sowie Vergleichsmaterialien zeigt.

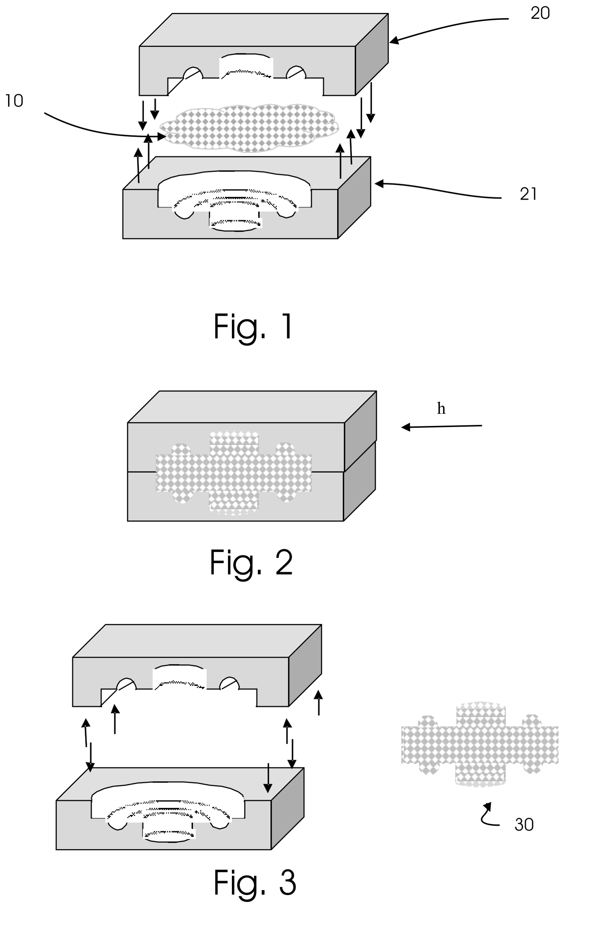

Figuren 1 bis 3 zeigen schematisch den Ablauf eines Herstellungsverfahrens eines erfindungsgemäßen Formteils gemäß einer ersten Ausführungsform. In dieser wird in Schritt 1, in Figur 1 dargestellt, eine Formmasse 10, bestehend aus von Polymer umgebene Popcorn mit ggf. weiterem Bindemittel in eine Kavität eingebracht, die durch zwei entsprechende Formkörper 20 und 21 gebildet wird. In Schritt 2, in Fig. 2 dargestellt, wird das Formteil gezielt elektromagnetischer Strahlung in einem Frequenzbereich von ≥30 kHz bis ≤300GHz ausgesetzt, so dass sich unter Bestrahlung (und ggf. Druck) das Formteil 30 bildet, welches dann in Schritt 3, in Fig. 3. dargestellt, entnommen wird.

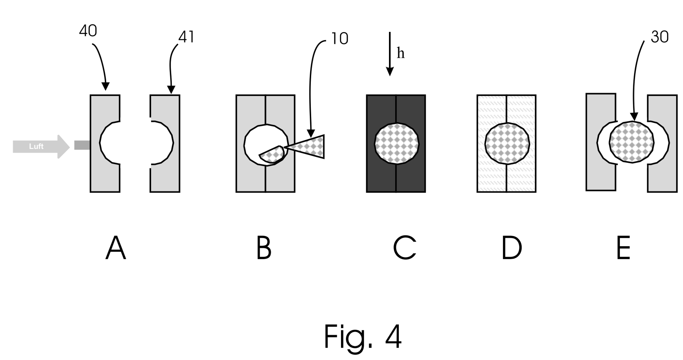

Fig. 4 zeigt schematisch den Ablauf eines Herstellungsverfahrens eines erfindungsgemäßen Formteils gemäß einer zweiten Ausführungsform mittels eines Formteilautomaten. Hier wird zunächst die Kavität, die durch die beiden Formkörper 40 und 41 gebildet wird, geschlossen (Schritt A), anschließend die Formmasse 10 unter Druck eingefüllt (Schritt B).

Nach Bestrahlung mit elektromagnetischer Strahlung in einem Frequenzbereich von ≥30 kHz bis ≤300GHzm ggf. unter Druck (Schritt C) und Abkühlen (Schritt D) kann dann das entstandene Formteil 30 entnommen werden.

Die Erfindung wird außerdem anhand von Beispielen erläutert, die rein illustrativ und als nicht beschränkend anzusehen sind.

### 1) Herstellung von zwei- und dreidimensionalen Formteilen mittels Radiowellen

Zur Herstellung von Formteilen aus Popcorngranulat mittels Radiowellentechnologie wurde das Popcorngranulat mit verschiedenen Bindemitteln versehen.

Bei der 1. Variante (siehe Tabelle 1) wurde ein Polymer auf der Basis von Polypropylen und ein Harnstoff-Formaldehyd-Harz (UF, BASF Kaurit 350) verwendet. In der ersten Stufe wurde das Polypropylen 1 % atro (bezogen auf das Popcorngranulat) aufgetragen und anschließend das UF in einem Beleimungsaggregat auf das Popcorn gesprüht. In zweiten Prozessschritt wurde das beleimte Material durch einen Förderautomaten mittels Injektionsdüsen in die Kavität des Formteilautomaten gefördert, in welcher ein optionaler Überdruck (z. B. 0,1 bis 6 bar) und ca. 5 bis 7 kV Radiowellen erzeugt werden. Je nach Dicke und Rohdichte des Formteils wurden Verweilzeiten von 15 bis 50 Sekunden eingesetzt. Im letzten Prozessschritt wurde das fertige Formteil aus der Kavität entnommen. In Tab. 1 sind die mechanisch-technologischen Eigenschaften dieser so hergestellten Formteile aufgeführt. Anstelle des Polymers und des UF-Harzes wurden in weiteren Versuchen lediglich UF-Harz (siehe Tabelle 2) und natürliche Bindemittel auf Albumin- und Raps-Protein-Basis verwendet (siehe Tabelle 3).

**Tab. 1: Mechanisch-technologische Eigenschaften und Formaldehyd-Emissionswerte von PP und UF-Harz gebundenen Formteilen mit unterschiedlichen Dichten und Dicken nach der Vernetzung mittels Radiowellen**

| **Polymer atro Popcorn** | **Dichte [kg/m³]** | **Dicke [mm]** | **QZ [kPa]** | **Formaldehyd-emission in [mg/h*m²]** |
|---|---|---|---|---|
| | | | | **DIN EN 717-2** |
| PP1% | 150 | 20 | 260 | 0,60 |
| UF7% | | 50 | 210 | 0,65 |
| PP1% | 120 | 20 | 190 | 0,51 |
| UF7% | | 50 | 182 | 0,55 |
| PP1% | 90 | 20 | 179 | 0,40 |
| UF7% | | 50 | 140 | 0,43 |
| PP1% | 60 | 20 | 100 | 0,30 |
| UF7% | | 50 | 85 | 0,36 |

**Tab. 2: Mechanisch-technologische Eigenschaften und Formaldehyd-Emissionswerte von UF-Harz gebundenen Formteilen mit unterschiedlichen Dichten und Dicken nach der Vernetzung mittels Radiowellen**

| **Bindemittel atro Popcorn** | **Dichte [kg/m³]** | **Dicke [mm]** | **QZ [kPa]** | **Formaldehyd-emission in [mg/h*m²]** |
|---|---|---|---|---|
| | | | | **DIN EN 717-2** |
| UF 8 % | 150 | 20 | 300 | 0,66 |
| | | 50 | 275 | 0,69 |
| UF 8 % | 120 | 20 | 258 | 0,56 |
| | | 50 | 240 | 0,59 |
| UF 8 % | 90 | 20 | 220 | 0,43 |
| | | 50 | 205 | 0,46 |
| UF 8 % | 60 | 20 | 140 | 0,33 |
| | | 50 | 128 | 0,39 |

**Tab. 3: Mechanisch-technologische Eigenschaften und Formaldehyd-Emissionswerte von Albumin oder Rapsprotein gebundenen Formteilen mit unterschiedlichen Dichten nach der Vernetzung mittels Radiowellen**

| **Bindemittel atro Popcorn** | **Dichte [kg/m³]** | **Dicke [mm]** | **QZ [kPa]** |
|---|---|---|---|
| Albumin 10 % | 160 | 30 | 220 |
| Rapsprotein 9 % | | | 205 |
| Albumin 10 % | 120 | 30 | 175 |
| Rapsprotein 9 % | | | 155 |
| Albumin 10 % | 80 | 30 | 135 |
| Rapsprotein 9 % | | | 105 |

Weiterhin wurden zur Herstellung von 20 mm dicken flexiblen Formteilen aus Popcorngranulat eine Doppelbeleimung durchgeführt, in dem zunächst die Popcorngranulate mit flüssiger Gelatine (ca. 50 % Feststoffanteil, Fa. Fritz Häcker GmbH) in der Dosierung % bezogen auf atro Popcorn beharzt. Nach der Trocknung bei 70 °C im Stromtrockner wurde auf das Material mit MUF (66% Feststoffanteil, BASF Kauramin 620), UF (BASF Kaurit 350) und PUR (Hexion) in verschiedenen Dosierungen atro auf Popcorn mit Gelatine beleimt und als Formmasse in die Kavität eingebracht, welche unter Anwendung von Überdruck (z. B. 0,1 bis 6 bar) und Radiowellen vernetzt wurde. Nach insgesamt 30 Sekunden (1,5 s/mm Plattendicke) wird das fertige, flexible Formteil der Kavität entnommen und klimatisiert. In Tab. 4 sind die mechanisch-technologischen Eigenschaften dieser flexiblen Formteile aufgeführt.

**Tab. 4: Mechanisch-technologische Eigenschaften und Formaldehyd-Emissionswerte von Gelatine, UF-Harz, MUF-Harz und PUR gebundenen Formteilen nach der Vernetzung mittels Radiowellen**

| **Polymer atro Popcorn** | **Dichte [Kg/m³]** | **Biegef. [N/mm²]** | **QZ [kPa]** | **Formaldehyd-emission in [mg/h*m²]** |
|---|---|---|---|---|
| | | | | **DIN EN 717-2** |
| Gelatine 4 % | 150 | 5,3 | 230 | 0,65 |
| UF 6% | | | | |
| Gelatine 4 % | 150 | 5,9 | 280 | 0,43 |
| MUF 6% | | | | |
| Gelatine 5 % | 150 | 10,0 | 350 | nicht nachweisbar |
| PUR 3 % | | | | |

### 2) Herstellung von zwei- und dreidimensionalen Formteilen mittels Radiowellen ohne Bindemittel

Popcorngranulat wurde gemäß Beispiel 1) nach dem Bichsel-Verfahren hergestellt und anschließend ohne jegliche Benetzung von synthetischen und/oder natürlichen Bindemitteln und Additiven im Formteilautomaten mittels Radiowellen bei 6 kV und einem Überdruck von 0,5 bar verpresst. Überraschenderweise hat sich gezeigt, dass auch ohne Einsatz jeglicher Bindemittel und Additive eine bestimmte Vernetzung zwischen den einzelnen Popcorngranulaten stattfindet, die auf die Karamellisierung und gleichzeitige Maillard-Reaktion auf der Oberfläche der Stärkegranulate zurückzuführen ist. Entsprechend sind folgende mechanisch-technologische Eigenschaften festgestellt worden (Tabelle 5).

**Tab. 5: Mechanisch-technologische Eigenschaften von bindemittelfreien Formteilen nach der Vernetzung mittels Radiowellen**

| **Beleimung atro Popcorn** | **Dichte [kg/m³]** | **Biegef. [N/mm²]** | **QZ [kPa]** |
|---|---|---|---|
| 0% | 120 | 1,1 | 15 |
| 0 % | 80 | 0,9 | 11 |
| 0 % | 60 | 0,25 | 8 |

### 3) Herstellung von zwei- und dreidimensionalen Formteilen mittels Radiowellen unter Einsatz von PLA (polylactic acid, Polymilchsäure)

Zur Herstellung von Formteilen aus Popcorngranulat mittels Radiowellentechnologie und PLA wurde das Popcorngranulat wie folgt behandelt:
Das pulverförmige PLA wurde in einer Dosierung von 8 % atro (bezogen auf das Popcorngranulat) in einem Beleimungsaggregat unter Anwendung von Heißluft bei 140 °C mit dem Popcorngranulat vermischt. Durch die Erwärmung wurde das PLA fließfähig und gleichmäßig auf der Popcornoberfläche verteilt. Anschließend wurde das mit PLA beschichtete Granulat in den Formteilautomaten befördert und mittels Radiowellen bei 8,3 kV und einem Unterdruck von 2,8 bar für 4 s/mm Formteildicke (Wanddicke 20 mm) ausgehärtet.

Im letzten Prozessschritt wurde das fertige Formteil aus der Kavität entnommen. In folgender Tabelle 6 sind die mechanisch technologischen Eigenschaften dargestellt:

**Tab. 6: Mechanisch-technologische Eigenschaften von PLA gebundenen Formteilen nach der Vernetzung mittels Radiowellen**

| **Beleimung atro Popcorn** | **Dichte [kg/m³]** | **Biegef. [N/mm²]** | **QZ [kPa]** |
|---|---|---|---|
| PLA 8 % | 120 | 4,9 | 140 |
| PLA 8 % | 80 | 2,7 | 105 |
| PLA 8 % | 40 | 1,8 | 65 |

### 4) Herstellung von zwei- und dreidimensionalen Formteilen mittels Mikrowellen

Zur Herstellung von Formteilen aus Popcorngranulat mittels Mikrowellentechnologie wurde das Popcorngranulat mit melaminverstärktem Harnstoff-Formaldehyd-Harz (MUF, BASF Kauramin 620) versehen.

Zunächst wurde das MUF mit 8 % atro (bezogen auf das Popcorngranulat) in einem Beleimungsaggregat auf das Popcorn aufgetragen. Anschließend wurde das beleimte Material durch pneumatisches Füllsystem in die Kavität des Formteilautomaten gefördert, in welcher die dielektrische Erwärmung der Popcorngranulate bei ca. 1,2 bis 3 kW Mikrowellenleistung stattfand. Je nach Dicke und Rohdichte des Formteils wurden Verweilzeiten von bis zu 90 Sekunden eingesetzt. Schließlich wurde das fertige Formteil aus der Kavität entnommen. In Tab. 7 sind die mechanisch-technologischen Eigenschaften der mittels Mikrowellentechnologie hergestellten Formteile aufgeführt.

**Tab. 7: Mechanisch-technologische Eigenschaften und Formaldehyd-Emissionswerte von MUF-Harz gebundenen Formteilen mit unterschiedlichen Dichten und Dicken nach der Vernetzung mittels Mikrowellen**

| **Bindemittel atro Popcorn** | **Dichte [kg/m³]** | **Dicke [mm]** | **QZ [kPa]** | **Formaldehyd-emission in [mg/h*m²] DIN EN 717-2** |
|---|---|---|---|---|
| MUF 8 % | 150 | 20 | 300 | 0,45 |
| | | 50 | 275 | 0,48 |
| MUF 8 % | 120 | 20 | 258 | 0,38 |
| | | 50 | 240 | 0,43 |
| MUF 8 % | 90 | 20 | 220 | 0,29 |
| | | 50 | 205 | 0,36 |
| MUF 8 % | 60 | 20 | 140 | 0,22 |
| | | 50 | 128 | 0,25 |

### 5) Herstellung von zwei- und dreidimensionalen Formteilen mit unterschiedlichen Popcorn-Granulatgrößen mittels Radiowellen unter Einsatz von PLA (polylactic acid, Polymilchsäure) und Harnstoffformaldehydharz (UF)

Zur Herstellung von Formteilen aus Popcorngranulat mittels Radiowellentechnologie und PLA und UF wurde das Popcorngranulat wie folgt behandelt:
Das Popcorngranulat wurde entweder direkt nach dem Expansionsprozess in unterschiedliche Granulatgrößen separiert (Fraktion 1: 1 mm - 2,5 mm und Fraktion 2: 2,6 mm - 4,5 mm) und getrennt behandelt.

Die flüssige PLA-Lösung wurde in einer Dosierung von 5 - 8 % atro (bezogen auf das Popcorngranulat) in einem Beleimungsaggregat jeweils getrennt auf beide Fraktionen aufgetragen. Beide Fraktionen werden bei ca. 60 -.80 °C getrocknet. Anschließend wurden die mit PLA beschichteten Fraktionen in einem Beleimungsaggregat mit 5 - 8 % UF-Harz beleimt und je nach o. g. Fraktionsgröße 1 und 2 abwechselnd pneumatisch in den Formteilautomaten befördert. Dabei entstehen mehrschichtige Formteile, in denen die unterschiedlichen Fraktionen aufeinandergeschichtet werden. Dabei besteht auch die Möglichkeit, dass sich je nach Formteileigenschaften die Popcorn-Graulatgrößen gezielt vermischt werden, wobei Adhäsionskräfte auf den einzelnen Granulatoberflächen verstärkt werden. Die Formteile wurden mittels Radiowellen bei 7 kV und einem Unterdruck von 0,6 bar für 4 s/mm Formteildicke ausgehärtet.

Im letzten Prozessschritt wurde das fertige Formteil aus der Kavität entnommen. In folgender Tabelle 8 sind die mechanisch technologischen Eigenschaften dargestellt:

**Tab. 8: Mechanisch-technologische Eigenschaften von PLA und UF gebundenen Formteilen nach der Vernetzung mittels Radiowellen**

| **Beleimung atro Popcorn** | **Dichte [kg/m³]** | **Biegef. [N/mm²]** | **QZ [N/mm²]** | **Wärmeleitfäh igkeit λ** [W/(m·K)] |
|---|---|---|---|---|
| PLA 5 % + UF 8 % | 120 | 5,1 | 0,23 | 0,040 |
| PLA 8 % + UF 5 % | 120 | 5,3 | 0,25 | 0,041 |
| PLA 5 % + UF 8 % | 80 | 3,8 | 0,22 | 0,0385 |
| PLA 8 % + UF 5 % | 80 | 3,6 | 0,21 | 0,0380 |
| PLA 5 % + UF 8 % | 60 | 1,8 | 0,18 | 0,0372 |
| PLA 8 % + UF 5 % | 60 | 1,6 | 0,15 | 0,0375 |

Es sei darauf hingewiesen, dass die erfindugnsgemäßen Herstellungsprozesse noch weiter varriert werden können, was zusätzliche bevorzugte Ausführungsformen der Erfindung darstellen.

So werden einer weiteren Variante die Fraktionen 1 und 2 erst gemeinsam coatiert, beleimt und danach separiert.

Weiterhin sei darauf hingewiesen, dass es möglich ist, unter anderem durch die Variation der unterschiedlichen Granulatgrößen positive Effekte, wie eine bessere Oberflächenhaftung, bessere Schallabsorptionseigenschaften, geringer Wärmeleitfähigkeitseigenschaften zu erzielen und somit die physikalisch-technologischen Eigenschaften nochmals merklich zu verbessern.

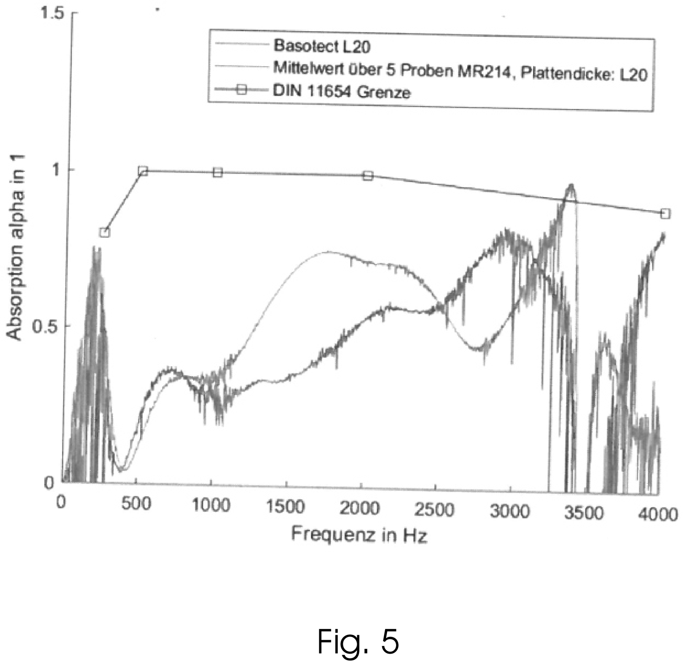

Insbesondere die Schallabsorptionseigenschaften wurden noch genauer untersucht. Fig. 5 zeigt die Schallabsorptionseigenschaften erfindungsgemäß hergestellter flacher Popcorn-Formteile (obere Kurve im Bereich von 1500-2000Hz) mit denen der auf Markt erhältlichen Basotec L 20 Materialien (untere Kurve im Bereich von 1500-2000 Hz) verglichen. Die als Referenz ebenfalls eingetragene DIN 11654 beschreibt die empfohlene Schallabsorptionsgrenze im Frequenzbereich 0 bis 4000 Hz. Es ist erkenntlich, dass die Popcorn-Formteile für Zwecke zur Schallabsorption sehr gut geeignet sind und einige handelsüblichen Materialien sogar übertreffen.

Die einzelnen Kombinationen der Bestandteile und der Merkmale von den bereits erwähnten Ausführungen sind exemplarisch; der Austausch und die Substitution dieser Lehren mit anderen Lehren, die in dieser Druckschrift enthalten sind mit den zitierten Druckschriften werden ebenfalls ausdrücklich erwogen. Der Fachmann erkennt, dass Variationen, Modifikationen und andere Ausführungen, die hier beschrieben werden, ebenfalls auftreten können ohne von dem Erfindungsgedanken und dem Umfang der Erfindung abzuweichen. Entsprechend ist die obengenannte Beschreibung beispielhaft und nicht als beschränkend anzusehen. Das in den Ansprüchen verwendete Wort "umfassen" schließt nicht andere Bestandteile oder Schritte aus. Der unbestimmte Artikel "ein" schließt nicht die Bedeutung eines Plurals aus. Die bloße Tatsache, dass bestimmte Maße in gegenseitig verschiedenen Ansprüchen rezitiert werden, verdeutlicht nicht, dass eine Kombination von diesen Maßen nicht zum Vorteil benutzt werde kann. Der Umfang der Erfindung ist in den folgenden Ansprüchen definiert und den dazugehörigen Äquivalenten.

## Patentansprüche

1. Verfahren zur Herstellung von popcornhaltigen Formteilen, wobei während der Herstellung der Formteile dieser zeitweise gezielt elektromagnetischer Strahlung in einem Frequenzbereich von ≥30 kHz bis ≤300GHz ausgesetzt werden.

2. Verfahren nach Anspruch 1, wobei Radio und/oder Mikrowellen benutzt werden.

3. Verfahren gemäß Anspruch 1 oder 2, umfassend einen Pressschritt wobei während der Verpressung der Formteile diese zeitweise gezielt elektromagnetischer Strahlung in einem Frequenzbereich von ≥30 kHz bis ≤300GHz ausgesetzt werden.

4. Verfahren nach einem der Ansprüche 1 bis 3, wobei beim Einsatz der elektromagnetischen Strahlung ein zumindest teilweises Verkleben und/oder Aufschmelzen an der Oberfläche des Formteils stattfindet.

5. Verfahren nach einem der Ansprüche 1 bis 4, wobei beim Einsatz der elektromagnetischen Strahlung zumindest an einem Bereich an der Oberfläche des Formteils eine Temperatur von ≥ 70°C erreicht wird.

6. Verfahren nach einem der Ansprüche 1 bis 5, wobei die elektromagnetische Strahlung eine Leistung von ≥ 20 W bis ≤ 5000W besitzt.

7. Verfahren nach einem der Ansprüche 1 bis 6, wobei die Leistungsdichte (gemessen bezüglich der Oberfläche des Formteils) von ≥ 1 W/cm² bis ≤ 250 W/cm² beträgt.

8. Verfahren gemäß einem der Ansprüche 1 bis 7, umfassend die Schritte
a) Herstellen von Popcorn,
b) optionale Hydrophobierung des in Schritt a) hergestellten Popcorns mittels eines Polymers
c) optionale Nachbehandlung,
d) optionale Zugabe von Bindemittel,
e) Herstellung des Formteils,
f) optionale Beschichtung der Formteiloberfläche,
g) optionale Kaschierung.

9. Verfahren gemäß einem der Ansprüche 1 bis 8, wobei d) nicht optional ist und als Bindemittel Thermoplasten, Duroplasten, Aminoplasten, Phenoplasten, Isocyanate, Proteine, Tannine, Stärke, synthetische Bindemittel oder naturnahe Bindemittel, oder Mischungen von Bindemitteln eingesetzt werden, wie z. B. Harnstoff-Formaldehyd-Harz, Melamin-Formaldehyd-Harz, Melaminverstärktes-Harnstoff-Formaldehyd-Harz, Tannin-Formaldehyd-Harz, Phenol-Formaldehyd-Harz, polymeres Diphenyl-Methan-Di-Isocyanat oder Mischungen daraus verwendet wird.

10. Verfahren gemäß einem der Ansprüche 1 bis 9, wobei Schritt e) mittels Formpressung und/oder Verwendung von Formteilautomaten erfolgt.

11. Verfahren gemäß einem der Ansprüche 1 bis 10, wobei in Schritt e) eine Presszeit von ≥ 0,5 s/mm Formteil und ≤ 24 s/mm Formteil verwendet wird.

12. Verfahren gemäß einem der Ansprüche 1 bis 11, wobei in Schritt e) ein Überdruck von ≥ 0,1 bar und ≤ 10 bar verwendet wird.

13. Verfahren gemäß einem der Ansprüche 1 bis 8, wobei in Schritt e) ein Unterdruck von ≥ 0,1 bar und ≤ 3 bar verwendet wird.

14. Formteil, erhalten durch das Verfahren gemäß einem der Ansprüche 1 bis 13, wobei das Formteil im Wesentlichen aus Popcorn besteht.

15. Verwendung von Formteilen gemäß Anspruch 14 und/oder Formteilen, hergestellt gemäß eines Verfahrens gemäß einem der Ansprüche 1 bis 13 für:
- Akustische Verbund-Formteile,
- Verpackungsmaterialien,
- Kühlboxen,
- Schutzverpackung für Elektrogeräte,
- Gewürzdosen,
- Automobilteile,
- Wohnmobilteile,
- Kopfstützen,
- Sonnenblenden,
- Kindersitzschalen,
- Dämmmatten,
- Dämmmaterialien (z. B. für Elektrogeräte),
- Geschirr,
- Sportartikel,
- Yoga-Rollen,
- Nackenrollen,
- Spielzeug,
- Bilderrahmen,
- Präsentkörbe.
